# FASCICULE DE BREVET EUROPEEN

(11) **EP 0 425 358 B1**
(45) Date de publication et mention de la délivrance du brevet: **19.01.1994**
(21) Numéro de dépôt: 90402965.9
(22) Date de dépôt: 22.10.1990
(51) Int. Cl.: F16B 37/12

(54) **Vis-cheville, notamment pour matériau tendre, et outil propre à sa mise en oeuvre**
Schraubdübel, insbesondere für weiches Material, und dafür geeignetes Werkzeug
Screwplug, especially for soft material, and tool for installing the same

(30) Priorité: 25.10.1989 FR 8913982
(43) Date de publication de la demande: 02.05.1991
(73) Titulaire: LEGRAND, F-87045 Limoges Cédex (FR)
(72) Inventeur: Auger, Jean-Charles, F-76580 Le Trait (FR); Gosse, Marc, F-76690 St Georges Sur Fontaine (FR)
(74) Mandataire: CABINET BONNET-THIRION

(56) Documents cités:
- EP-A- 0 165 674
- DE-A- 3 311 597
- LU-A- 68 819
- US-A- 3 289 290
- US-A- 4 109 691

## Description

La présente invention concerne d'une manière générale les vis-chevilles.

Par vis-chevilles, on entend ici des vis dont le fût est creux, ce fût présentant, corollairement, de manière usuelle, en saillie sur sa surface extérieure, au moins un filet hélicoïdal propre à son engagement, par vissage, dans un quelconque matériau.

De telles vis à fût creux se trouvent notamment décrites dans les brevets américains Nos 3.289.290 et 4.601.625.

Dans le brevet américain No 3.289.290, il s'agit plus précisément d'une vis à mettre directement en oeuvre pour l'assemblage de deux pièces, et l'alésage interne du fût creux de cette vis est mis à profit pour le passage d'un outil de forage propre à la formation d'un avant-trou dans de telles pièces.

Dans le brevet américain No 4.601.625, il s'agit, au contraire, plus précisément, d'une cheville qui est destinée à être implantée dans une première pièce, en pratique une pièce en matériau tendre, tandis que l'alésage interne de son fût creux est destiné à la mise en oeuvre d'une vis propre à permettre de rapporter une deuxième pièce sur la précédente.

Dans l'un et l'autre cas, les moyens d'emboîtement que présente en façade la tête de ces vis-chevilles pour en permettre l'entraînement en rotation à l'aide d'un outil sont des moyens d'emboîtement classiques, en pratique une simple saignée diamétrale.

Il est connu par ailleurs, par le brevet américain No 4.109.691, qui reprend à cet égard des dispositions décrites pour un écrou dans le brevet américain No 3.460.428, de doter la tête d'une vis, dont le fût est plein, de moyens d'emboîtement qui, destinés eux aussi à en permettre l'entraînement en rotation par un outil, se présentent sous la forme d'ergots frangibles.

Cette disposition a pour avantage de limiter à une valeur maximale donnée, correspondant à la rupture de ces ergots, le couple de serrage susceptible d'être appliqué à une telle vis, et donc de ménager le matériau avec lequel est en prise le fût de celle-ci, notamment lorsqu'il s'agit d'un matériau tendre.

Mais elle se trouve en défaut si, préalablement à son engagement dans une pièce en un tel matériau tendre, formant pièce de support, la vis doit traverser, pour la fixer sur la précédente, une pièce en matériau plus dur ne présentant pas par avance de perçage propre à son passage, comme cela peut par exemple être le cas d'une quelconque pièce en matière synthétique à fixer en un quelconque de ses points à une plaque en plâtre ou analogue, et, par exemple, à une plaque en plâtre du type de celle dont chacune des faces est cartonnée.

Dans un tel cas, le couple de serrage à appliquer à la vis pour que, par fluage de la matière synthétique concernée, elle se fraye un passage à travers la pièce à fixer peut être suffisant pour conduire à l'élimination prématurée de ses ergots frangibles, voire, même, à un cisaillage intempestif de son fût.

La présente invention a d'une manière générale pour objet une disposition permettant au contraire d'éviter un tel inconvénient.

De manière plus précise, elle a pour objet une vis-cheville du genre comportant un fût creux, qui, évidé axialement par un alésage interne débouchant axialement à l'une et l'autre de ses extrémités, présente, en saillie sur sa surface extérieure, au moins un filet hélicoïdal, et une tête, qui présente, en façade, des moyens d'emboîtement propres à permettre l'entraînement en rotation de l'ensemble à l'aide d'un outil, cette vis-cheville étant d'une manière générale caractérisée en ce que, conjointement, les moyens d'emboîtement que présente sa tête comportent au moins un ergot, qui, en saillie sur ladite tête, en position excentrée par rapport à l'axe dudit fût creux, est frangible, la tranche d'extrémité dudit fût creux s'étend radialement sur une largeur, qui, à compter de sa surface intérieure est supérieure à celle de sa partie courante, et, pour agrandir un avant trou, déjà pratiqué, cette tranche d'extrémité présente en saillie plusieurs dents qui, réparties circulairement, s'étendent radialement sur toute sa largeur et sont délimitées extérieurement par une surface conique.

La fraise que forme par ses dents la tranche d'extrémité de la vis-cheville suivant l'invention permet avantageusement d'agrandir l'avant-trou pratiqué par l'outil, et donc de minimiser le couple de vissage à appliquer à cette vis-cheville pour que son fût élargisse ensuite à ses propres dimensions cet avant-trou, en évitant ainsi une rupture prématurée des ergots frangibles permettant conjointement l'entraînement en rotation de l'ensemble.

Il en est d'autant plus ainsi que, la tranche d'extrémité du fût creux de la vis-cheville suivant l'invention s'étendant radialement sur une largeur qui, à compter de la surface intérieure de ce fût creux, est supérieure à celle de sa partie courante, ou autrement dit, le diamètre extérieur de la fraise prévue suivant l'invention étant supérieur à celui de la partie courante du fût creux dont elle forme l'extrémité, ce couple de vissage se trouve déjà minimisé.

De préférence, à compter de la tête de la vis-cheville suivant l'invention, le filet hélicoïdal de son fût creux a d'abord pour enveloppe extérieure une surface cylindrique, puis, en direction de la tranche d'extrémité de ce fût creux, une surface conique.

Ainsi, la partie du filet dont l'enveloppe est une surface conique permet avantageusement une déformation progressive, en pratique suivant une légère hélice, du matériau constitutif de la pièce à fixer, par fluage de ce matériau, jusqu'à permettre ensuite le passage à plein diamètre de la partie dont l'enveloppe est une surface cylindrique, celle-ci, ayant, elle, à charge d'assurer la tenue mécanique de l'ensemble dans le matériau constitutif de la pièce de support sur laquelle doit être rapportée la pièce à fixer.

Ainsi, dans le cas où, comme indiqué à titre d'exemple, bien entendu non limitatif, doivent être prises en considération une pièce de support en matériau tendre et une pièce à fixer en matériau plus dur, un compromis particulièrement avantageux est trouvé entre le travail nécessaire à la traversée de la pièce en matériau plus dur et celui correspondant à l'implantation de l'ensemble dans la pièce en matériau tendre.

Les caractéristiques et avantages de l'invention ressortiront d'ailleurs de la description qui va suivre, à titre d'exemple, en référence aux dessins schématiques annexés sur lesquels :
la figure 1 est une vue en élévation d'une vis-cheville suivant l'invention ;
la figure 2 en est une vue en coupe axiale, suivant la ligne II-II de la figure 1 ;
la figure 3 en est une vue de dessus, suivant la flèche III de la figure 1 ;
la figure 4 en est une vue de dessous, suivant la flèche IV de la figure 1 ;
la figure 5 reprend, à échelle supérieure, le détail de la figure 2 repéré par un encart V sur cette figure 2 ;
la figure 6 est une vue en perspective d'un outil propre à la mise en oeuvre de la vis-cheville suivant l'invention ;
la figure 7 est une vue, partie en élévation, et, à la faveur d'un arrachement, partie en coupe axiale, suivant la ligne VII-VII de la figure 6, de cet outil ;
la figure 8 en est une première vue de bout, suivant la flèche VIII de la figure 7 ;
la figure 9 en est une deuxième vue de bout, suivant la flèche IX de la figure 7 ;
la figure 10 en est une vue partielle en plan, suivant la flèche X de la figure 7 ;
les figures 11A, 11B et 11C sont, à échelle inférieure, des vues en coupe axiale illustrant diverses phases successives de la mise en oeuvre d'une vis-cheville suivant l'invention ;
la figure 12 est, avec un arrachement local, une vue en élévation analogue à celle de la figure 1, pour une variante de réalisation de la vis-cheville suivant l'invention ;
la figure 13 est une vue en coupe transversale de cette variante de réalisation, suivant la ligne XIII-XIII de la figure 12 ;
les figures 14A et 14B sont des vues en coupe axiale, qui, à la manière des figures 11A, 11B et 11C, illustrent diverses phases successives de la mise en oeuvre de cette variante de réalisation.

Tel qu'illustré sur ces figures, et de manière connue en soi, la vis-cheville 10 suivant l'invention comporte un fût 11 qui est creux, ce fût 11 étant évidé, axialement, par un alésage interne débouchant axialement à l'une et à l'autre de ses extrémités.

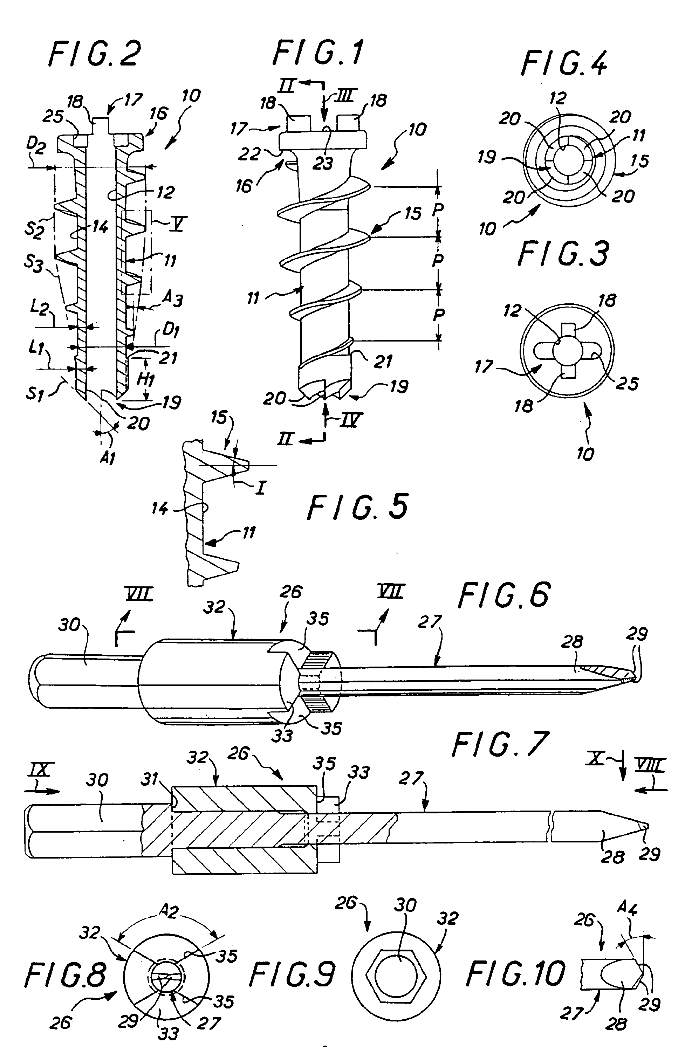

En pratique, dans la forme de réalisation plus particulièrement représentée sur les figures 1 à 5, la surface intérieure 12 de ce fût creux 11 est cylindrique sur toute la longueur de celui-ci, et, en section transversale, elle a un contour circulaire.

De manière également connue en soi, le fût creux 11 présente, en saillie, sur sa surface extérieure 14, au moins un filet hélicoïdal 15.

Corollairement, la tête 16 de la vis-cheville 10 suivant l'invention présente, en façade, de manière connue en soi, des moyens d'emboîtement 17 propres à permettre l'entraînement en rotation de l'ensemble à l'aide d'un outil.

Suivant l'invention, et conjointement, d'une part, ces moyens d'emboîtement 17 comportent au moins un ergot 18, qui, en saillie sur la tête 16, parallèlement à l'axe du fût creux 11, mais en position excentrée par rapport à cet axe, est frangible, et, d'autre part, pour agrandir un avant trou déjà pratiqué, la tranche d'extrémité 19 de ce fût creux 11, c'est-à-dire l'extrémité de ce fût creux 11 opposée à la tête 16, présente, en saillie, parallèlement à cet axe, plusieurs dents 20 convenablement réparties circulairement, et constitue ainsi annulairement une fraise.

Dans les formes de réalisation représentées, quatre dents 20 sont ainsi prévues, qui, s'étendant chacune circulairement sur 90°, sont régulièrement réparties circulairement.

Ces dents 20, qui sont toutes identiques entre elles, s'étendent radialement sur toute la largeur L1 de la tranche d'extrémité 19 qu'elles affectent.

Elles présentent, en outre, toutes, et toutes dans le même sens, suivant le sens de rotation à appliquer à l'ensemble pour un vissage, un flanc raide et un flanc en pente douce, à la manière, usuelle, d'un outil.

Dans les formes de réalisation représentées, les dents 20 sont délimitées, extérieurement, par une surface conique S1.

De préférence, et tel que représenté, le demi-angle au sommet A1 de cette surface conique S1 est de l'ordre de 45°.

Dans la forme de réalisation plus particulièrement représentée sur les figures 1 à 5, la largeur L1 suivant laquelle s'étend radialement la tranche d'extrémité 19 du fût creux 11 ainsi affectée de dents 20, comptée à partir de la surface intérieure 12 de ce fût creux 11, est supérieure à celle, L2, de la partie courante de celui-ci.

Autrement dit, dans cette forme de réalisation, le fût creux 11 présente, à son extrémité, pour la définition de sa tranche d'extrémité 19, et à compter d'un épaulement 21 situé à une distance H1 de celle-ci, une surépaisseur.

En pratique, cette distance H1 n'est qu'une fraction de l'ordre par exemple du cinquième ou du sixième de la hauteur H2 du fût creux 11.

Du côté de la tête 16, la surface extérieure 14 du fût creux 11, qui, par ailleurs, est cylindrique dans sa partie courante, et notamment du côté de sa tranche d'extrémité 19, va en s'évasant légèrement en direction de cette tête 16.

La partie courante du fût creux 11, c'est-à-dire la partie de celui-ci située entre la portion évasée de sa surface extérieure 14 et son extrémité surépaissie, a donc, radialement, une épaisseur constante.

Il en est de même de son extrémité surépaissie.

A compter de la tête 16, le filet hélicoïdal 15 du fût creux 11 a, d'abord, pour enveloppe extérieure, et tel que schématisé par des traits interrompus sur la figure 2, une surface cylindrique S2, puis, en direction de la tranche d'extrémité 19 de ce fût creux 11, une surface conique S3.

De préférence, le diamètre D2 de la surface cylindrique S2 est sensiblement égal au double de celui, D1, de la surface extérieure 14 du fût creux 11 dans la partie courante de celle-ci.

De préférence, également, le filet hélicoïdal 15 s'étend suivant un pas régulier P sur toute la hauteur du fût creux 11, et la surface cylindrique S2 s'étend axialement sur au moins un tel pas P.

Quant à la surface conique S3, son demi-angle au sommet A3 est de préférence de l'ordre de 10°.

A son extrémité, c'est-à-dire à l'extrémité de la surface conique S3, le filet hélicoïdal 15 du fût creux 11 se raccorde sensiblement tangentiellement à la surface extérieure 14 de celui-ci.

De préférence, et tel que représenté, ce filet hélicoïdal 15 a une section axiale en forme de trapèze isocèle.

L'inclinaison I, sur une médiane de l'ensemble, de chacun des côtés de cette section axiale en trapèze isocèle est de l'ordre de 20°.

Le long de la surface conique S3, la petite base de section axiale en trapèze isocèle, qui est inclinée à l'image de la génératrice de celle-ci, reste sensiblement la même.

Seule diminue donc peu à peu, en direction de la tranche d'extrémité 19 du fût creux 11, la grande base de cette section axiale en trapèze isocèle.

Dans la forme de réalisation plus particulièrement représentée sur les figures 1 à 5, la surface inférieure 22 de la tête 16 est plate, perpendiculairement à l'axe du fût creux 11, et la surface extérieure 14 de celui-ci s'y raccorde tangentiellement par un large congé arrondi.

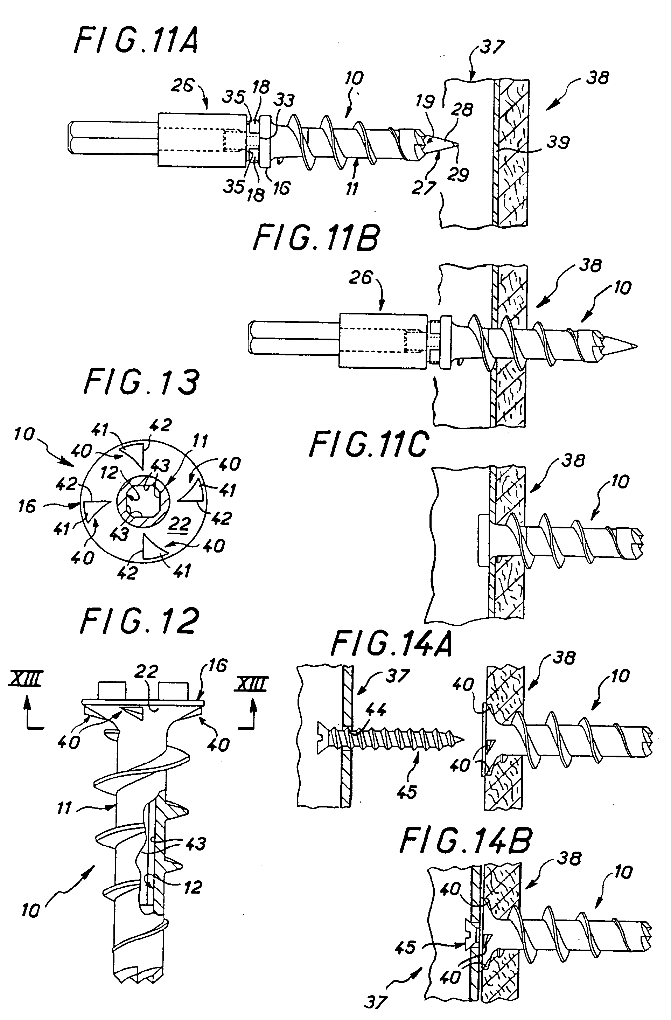

Dans cette forme de réalisation, et il en est de même dans la variante de réalisation représentée sur les figures 12, 13, la surface supérieure 23 de la tête 16 est également plate.

En pratique, les moyens d'emboîtement 17 que présente cette tête 16 comportent deux ergots frangibles 18 disposés en positions diamétralement opposées l'un par rapport à l'autre.

Il s'agit, dans les formes de réalisation représentées, d'ergots à faces parallèles, disposés sensiblement dans l'alignement l'un de l'autre.

Les moyens d'emboîtement 17 comportent également, dans ces formes de réalisation, une saignée diamétrale 25, et celle-ci s'étend en croix avec les ergots frangibles 18.

Tel que représenté à la figure 6, l'outil 26 prévu pour la mise en oeuvre d'une vis-cheville 10 suivant l'invention comporte, en combinaison, d'une part, une tige 27, qui est propre à être engagée dans l'alésage interne du fût creux 11 de cette vis-cheville 10, et dont l'extrémité 28 correspondante comporte au moins un tranchant 29, tandis que son autre extrémité 30 forme, au-delà d'un épaulement 31, une tête à six pans propre à l'entraînement en rotation de l'ensemble, et, d'autre part, disposé annulairement autour de cette tige 27, en butée contre l'épaulement 31 de celle-ci, un moyeu 32 présentant, sur sa tranche 33 tournée vers l'extrémité 28 à tranchant(s) 29 de la tige 27, au moins un évidement 35 par lequel il est apte à venir en prise avec un ergot frangible 18 de la vis-cheville 10.

Dans la forme de réalisation représentée, la vis-cheville 10 comportant deux ergots frangibles 18, le moyeu 32 de l'outil 26 présente lui-même deux évidements 35 disposés en positions diamétralement opposées l'un par rapport à l'autre.

Chacun de ces évidements 35 se présente sous la forme d'une échancrure dont les bords s'étendent sensiblement radialement par rapport à l'axe de la tige 27, et il s'étend lui-même autour de celle-ci suivant un secteur angulaire A2 de l'ordre de 120°.

Dans la forme de réalisation représentée, la tige 27 et le moyeu 32 forment des pièces distinctes, dûment emmanchées à force l'une avec l'autre.

Mais, en variante, l'outil 26 suivant l'invention pourrait tout aussi bien être réalisé d'un seul tenant.

Quoi qu'il en soit, formé à la faveur d'une double troncature, suivant deux plans inclinés qui se rapprochent l'un de l'autre en s'éloignant du moyeu 32, le tranchant 29 que présente la tige 27 à son extrémité 28 s'étend de préférence suivant un angle A4 de 30° par rapport à une normale à l'axe de cette tige 27.

En pratique, la tige 27 présente ainsi deux tranchants 29 disposés en positions opposées l'un par rapport à l'autre.

Dans l'application illustrée par les figures 11A, 11B, 11C, il est supposé qu'une pièce 37 en matériau relativement dur, en matière synthétique par exemple, est rapportée sur une pièce 38, ou pièce de support, en matériau tendre.

Par exemple, la pièce 37 est une goulotte à appliquer par son fond 39 sur la pièce de support 38.

Quant à cette pièce 38, il peut s'agir d'une plaque de plâtre à faces cartonnées.

Tel que représenté à la figure 11A, la vis-cheville 10 suivant l'invention est engagée sur la tige 27 de l'outil 26, jusqu'à ce que sa tête 16 vienne en appui sur la tranche 33 du moyeu 32 de celui-ci, avec pénétration de ses ergots frangibles 18 dans les évidements 35 affectant cette dernière.

Ainsi qu'il est aisé de le comprendre, l'extension circulaire relativement grande de ces évidements 35 facilite cette pénétration.

Par construction, les dispositions sont telles que l'extrémité 28 à tranchants 29 de la tige 27 de l'outil 26 s'étend alors largement au-delà de la tranche d'extrémité 19 du fût creux 11 de la vis-cheville 10.

L'outil 26 étant mis en action, il assure, par son extrémité 28 à tranchants 29, le perçage d'un avant-trou dans le fond 39 de la pièce 37 à fixer puis dans la pièce de support 38.

La fraise que constitue la tranche d'extrémité 19 du fût 11 de la vis-cheville 10 élargit ensuite cet avant-trou, et, par la partie du filet hélicoïdal 15 dont l'enveloppe est une surface conique S3, les dimensions de celui-ci sont progressivement portées à celles de la partie de ce filet hélicoïdal 15 dont l'enveloppe est une surface cylindrique S2.

Au terme de la pénétration totale de la vis-cheville 10 dans la pièce 37 et dans la pièce 38, les ergots frangibles 18 de cette vis-cheville 10 viennent à se casser.

La fixation de l'ensemble est alors terminée, figure 11C.

Bien entendu, l'outil 26 peut resservir, et, par la saignée diamétrale 25 de sa tête 16, la vis-cheville 10 précédemment mise en place peut si désiré être déposée.

Suivant la variante de réalisation illustrée par les figures 12 et 13, le fût creux de la vis-cheville 10 suivant l'invention a, radialement, une même épaisseur sur toute sa hauteur.

Autrement dit, dans cette variante de réalisation, il ne présente pas de surépaisseur à son extrémité.

En outre, dans cette variante de réalisation, la surface extérieure du fût creux est cylindrique sur toute sa hauteur.

De plus, la surface inférieure 22 de la tête 16 est tronconique, et elle présente, en saillie, au moins un ergot 40, qui, dans le sens de rotation correspondant au vissage, comporte un bord d'attaque 41 effilé en pointe, et un bord de fuite 42 plat, suivant un plan radial pour l'ensemble.

En pratique, dans la forme de réalisation représentée, quatre ergots 40, régulièrement répartis circulairement, sont prévus.

Enfin, dans cette variante de réalisation, la surface intérieure 12 du fût creux 11 est cannelée, cette surface intérieure 12 comportant en croix, quatre méplats 43.

Pour le reste, les dispositions sont du type de celles décrites précédemment.

Dans l'application illustrée par les figures 14A et 14B, à laquelle la variante de réalisation représentée sur les figures 12, 13 précédentes est plus particulièrement destinée, la pièce 37 à fixer présente par avance un perçage 44 pour le passage d'une vis 45.

Dans ce cas, il est d'abord procédé à l'implantation de la vis-cheville 10 dans la pièce de support 38, figure 12A, suivant un processus du même type que celui précédemment décrit.

Au terme de ce processus, sa tête 16 vient s'ancrer, avec ses ergots 40, dans la pièce de support 38.

Il est procédé ensuite au vissage de la vis 45 dans l'alésage interne de cette vis-cheville 10, figure 12B, après traversée préalable de la pièce à fixer 37 par cette vis 45.

Ainsi qu'il est aisé de le comprendre, du fait de la configuration cannelée de la surface intérieure 12 du fût creux 11, le couple de vissage nécessaire au vissage de cette vis 45 est avantageusement réduit.

Quant aux ergots 40, ils assurent la retenue de la vis-cheville 10 dans la pièce de support 38 lors d'un éventuel dévissage de cette vis 45.

Bien entendu, la présente invention ne se limite pas aux formes de réalisation décrites et représentées, mais englobe toute variante d'exécution et/ou de combinaison de leurs divers éléments dans les limites des revendications.

La vis-cheville suivant l'invention peut présenter, dûment décalés circonférentiellement les uns par rapport aux autres, plusieurs filets hélicoïdaux.

## Revendications

1. Vis-cheville du genre comportant un fût creux (11), qui, évidé axialement par un alésage interne débouchant axialement à l'une et à l'autre de ses extrémités, présente, en saillie sur sa surface extérieure, au moins un filet hélicoïdal (15), et une tête (16), qui présente, en façade, des moyens d'emboîtement (17) propres à permettre l'entraînement en rotation de l'ensemble à l'aide d'un outil, caractérisée en ce que, conjointement, les moyens d'emboîtement (17) que présente sa tête (16) comportent au moins un ergot (18), qui, en saillie sur ladite tête (16), en position excentrée par rapport à l'axe de son fût creux (11), est frangible, la tranche d'extrémité (19) dudit fût creux (11) s'étend radialement sur une largeur (L1), qui, à compter de sa surface intérieure (12) est supérieure à celle (L2) de sa partie courante, et, pour agrandir un avant trou, déjà pratiqué, cette tranche d'extrémité (19) présente en saillie plusieurs dents (20) qui, réparties circulairement, s'étendent radialement sur toute sa largeur (L1), sont délimitées extérieurement par une surface conique (S1) et constituent ainsi une fraise.

2. Vis-cheville suivant la revendication 1, caractérisée en ce que le demi-angle au sommet (A1) de la surface conique (S1) délimitant extérieurement les dents (20) de la tranche d'extrémité (19) du fût creux (11) est de l'ordre de 45°.

3. Vis-cheville suivant l'une quelconque des revendications 1,2, caractérisée en ce que, à compter de sa tête (16), le filet hélicoidal (15) de son fût creux (11) a d'abord pour enveloppe extérieure une surface cylindrique (S2), puis, en direction de la tranche d'extrémité (19) de ce fût creux (11), une surface conique (S3).

4. Vis-cheville suivant la revendication 3, caractérisée en ce que, la surface extérieure (14) de son fût creux (11) étant cylindrique dans sa partie courante, le diamètre (D2) de ladite surface cylindrique (S2) est sensiblement égal au double de celui (D1) de cette surface extérieure (14).

5. Vis-cheville suivant l'une quelconque des revendications 3,4, caractérisée en ce que ladite surface cylindrique (S2) s'étend axialement sur au moins un pas (P) du filet (15).

6. Vis-cheville suivant l'une quelconque des revendications 3 à 5, caractérisée en ce que le demi-angle au sommet (A3) de ladite surface conique (S3) est de l'ordre de 10°.

7. Vis-cheville suivant l'une quelconque des revendications 3 à 6, caractérisée en ce que, à son extrémité, le filet (15) de son fût creux (11) se raccorde sensiblement tangentiellement à la surface extérieure (14) de celui-ci.

8. Vis-cheville suivant l'une quelconque des revendications 1 à 7, caractérisée en ce que le filet (15) de son fût creux (11) a une section axiale en forme de trapèze isocèle.

9. Vis-cheville suivant la revendication 8, caractérisée en ce que l'inclinaison (I), sur la médiane de l'ensemble, de chacun des côtés de la section axiale en trapèze isocèle du filet (15) de son fût creux (11) est de l'ordre de 20°.

10. Vis-cheville suivant l'une quelconque des revendications 1 à 9, caractérisée en ce que, du côté de sa tête (16), la surface extérieure (14) de son fût creux (11), qui, par ailleurs, est cylindrique dans sa partie courante, va en s'évasant légèrement en direction de ladite tête (16).

11. Vis-cheville suivant l'une quelconque des revendications 1 à 10, caractérisée en ce que la surface inférieure (22) de sa tête (16) est plate.

12. Vis-cheville suivant l'une quelconque des revendications 1 à 10, caractérisée en ce que la surface inférieure (22) de sa tête (16) est tronconique.

13. Vis-cheville suivant l'une quelconque des revendications 1 à 12, caractérisée en ce que la surface inférieure (22) de sa tête (16) présente en saillie au moins un ergot (40).

14. Vis-cheville suivant l'une quelconque des revendications 1 à 13, caractérisée en ce que les moyens d'emboîtement (17) que présente sa tête (16) comportent deux ergots frangibles (18) disposés en positions diamétralement opposées l'un par rapport à l'autre.

15. Vis-cheville suivant la revendication 14, caractérisée en ce que les moyens d'emboîtement (17) que présente sa tête (16) comportent également une saignée diamétrale (25), en croix avec ses ergots frangibles (18).

16. Vis-cheville suivant l'une quelconque des revendications 1 à 15, caractérisée en ce que la surface intérieure (12) de son fût creux (11) est cannelée.

## Patentansprüche

1. Schraubdübel, umfassend einen hohlen Schaft (11), der axial durch eine innere Bohrung ausgespart ist, die axial an einem und am anderen seiner Enden ausmündet, und an seiner Außenseite hervorstehend wenigstens ein Schraubengewinde (15) umfaßt, und einen Kopf (16) der an der Stirnfläche Steckmittel (17) besitzt, die den Drehantrieb der Einheit mit Hilfe eines Werkzeugs gestatten, dadurch gekennzeichnet, daß zusätzlich die Steckmittel (17), die sein Kopf (16) besitzt, wenigstens eine Nase (18) umfassen, die an diesem Kopf (16) in einer bezüglich der Achse seines hohlen Schaftes (11) exzentrischen Stellung hervorsteht und abbrechbar ist, daß die Endkante (19) des hohlen Schafts (11) sich radial über eine Breite (L1) erstreckt, die von der Innenfläche (12) aus gerechnet größer als die (L2) seines laufenden Teils ist, und daß diese Endkante (19), um ein bereits hergestelltes Vorloch zu vergrößern, mehrere hervorstehende Zähne (20) besitzt, die kreisförmig verteilt sind, sich radial über seine ganze Breite (L1) erstrecken, außen durch eine konische Fläche (S1) abgegrenzt sind und auf diese Weise einen Fräser bilden.

2. Schraubdübel nach Anspruch 1, dadurch gekennzeichnet, daß der halbe Spitzenwinkel (A1) der konischen Fläche (S1), die die Zähne (20) der Endkante (19) des hohlen Schafts (11) außen abgrenzt, etwa 45° beträgt.

3. Schraubdübel nach einem der Ansprüche 1, 2, dadurch gekennzeichnet, daß das Schraubengewinde (15) seines hohlen Schafts (11), von seinem Kopf (16) aus gerechnet, als Außenumhüllende zunächst eine zylindrische Fläche (S2) und dann in Richtung auf die Endkante (19) dieses hohlen Schafts (11) zu eine konische Fläche (S3) hat.

4. Schraubdübel nach Anspruch 3, dadurch gekennzeichnet, daß die Außenfläche (14) seines hohlen Schaftes (11) in seinem laufenden Teil zylindrisch ist und der Durchmesser (D2) dieser zylindrischen Fläche (S2) im wesentlichen gleich dem Zweifachen des Durchmessers (D1) dieser Außenfläche (14) ist.

5. Schraubdübel nach einem der Ansprüche 3, 4, dadurch gekennzeichnet, daß die zylindrische Fläche (S2) sich axial über wenigstens eine Ganghöhe (P) des Gewindes (15) erstreckt.

6. Schraubdübel nach einem der Ansprüche 3 bis 5, dadurch gekennzeichnet, daß der halbe Spitzenwinkel (A3) der konischen Fläche (S3) etwa 10° beträgt.

7. Schraubdübel nach einem der Ansprüche 3 bis 6, dadurch gekennzeichnet, daß das Gewinde (15) seines hohlen Schaftes (11) an seinem Ende im wesentlichen tangential an dessen Außenfläche (14) anschließt.

8. Schraubdübel nach einem der Ansprüche 1 bis 7, dadurch gekennzeichnet, daß das Gewinde (15) seines hohlen Schaftes (11) einen axialen Querschnitt in Form eines gleichschenkligen Trapezes hat.

9. Schraubdübel nach Anspruch 8, dadurch gekennzeichnet, daß die Neigung (I) jeder der Seiten des die Form eines gleichschenkligen Trapezes besitzenden axialen Querschnitts des Gewindes (15) seines hohlen Schaftes (11) etwa 20° beträgt.

10. Schraubdübel nach einem der Ansprüche 1 bis 9, dadurch gekennzeichnet, daß die Außenfläche (14) seines hohlen Schaftes (11), die in ihrem laufenden Teil zylindrisch ist, sich auf der Seite seines Kopfes (16) in Richtung auf diesen Kopf (16) leicht ausweitet.

11. Schraubdübel nach einem der Ansprüche 1 bis 10, dadurch gekennzeichnet, daß die Unterseite (22) seines Kopfes (16) flach ist.

12. Schraubdübel nach einem der Ansprüche 1 bis 10, dadurch gekennzeichnet, daß die Unterseite (22) seines Kopfes (16) kegelstumpfförmig ist.

13. Schraubdübel nach einem der Ansprüche 1 bis 12, dadurch gekennzeichnet, daß die Unterseite (22) seines Kopfes (16) hervorstehend wenigstens eine Nase (40) besitzt.

14. Schraubdübel nach einem der Ansprüche 1 bis 13, dadurch gekennzeichnet, daß die Steckmittel (17), die sein Kopf (16) besitzt, zwei abbrechbare Nasen (18) umfassen, die in diametral einander entgegengesetzten Stellungen angeordnet sind.

15. Schraubdübel nach Anspruch 14, dadurch gekennzeichnet, daß die Steckmittel (17), die sein Kopf (16) besitzt, auch einen diametralen Schlitz (25) umfassen, der mit seinen abbrechbaren Nasen (18) in einem Kreuz angeordnet ist.

16. Schraubdübel nach einem der Ansprüche 1 bis 15, dadurch gekennzeichnet, daß die Innenfläche (12) seines hohlen Schaftes (11) gerillt ist.

## Claims

1. A threaded insert of the type comprising a hollow shank (11), which, being recessed axially by an internal through-passage which opens axially at either end of the insert, has at least one helical thread (15) projecting from its external surface, and a head (16) having at front thereof interlocking means (17) capable of enabling the assembly to be rotated by means of a tool, characterised in that conjointly the interlocking means (17) on the head (16) have at least one lug (18) which projects from said head (16) in a position which is eccentric relative to the axis of its hollow shank (11) and which can be broken off, the terminal edge (19) of said hollow shank (11) extends radially over a width (L1), which, from its internal surface (12) is greater than that (L2) from its lineal portion, and, to enlarge a front hole which has already been made the terminal edge (19) has a plurality of projecting teeth (20) which are distributed in a circular arrangement and which extend radially over the entire width (L1) and are delimited externally by a conical surface (S1) thus constituting a cutting tool.

2. A threaded insert according to Claim 1, characterised in that the half-angle at the apex (A1) of the conical surface (S1) externally delimiting the teeth (20) of the terminal edge (19) of the hollow shank (11) is in the order of 45°.

3. A threaded insert according to any one of Claims 1 and 2, characterised in that from its head (16), the helical thread (15) of its hollow shank (11) first of all has, in the form of an exterior envelope, a cylindrical surface (S2), then, in the direction of the terminal edge (19) of the hollow shank (11), a conical surface (S3).

4. A threaded insert according to Claim 3, characterised in that since the external surface (14) of the hollow shank (11) is cylindrical in its lineal portion, the diameter (D2) of said cylindrical surface (S2) is substantially equal to, or double, that (D1) of the external surface (14).

5. A threaded insert according to any one of Claims 3, 4, characterised in that said cylindrical surface (S2) extends axially over at least one pitch (P) of the thread (15).

6. A threaded insert according to any one of Claims 3 to 5, characterised in that the half-angle at the apex (A3) of said conical surface (S3) is in the order of 10°.

7. A threaded insert according to any one of Claims 3 to 6, characterised in that at its end the thread (15) of the hollow shank (11) is joined in substantially tangential manner to the external surface (14) thereof.

8. A threaded insert according to any one of Claims 1 to 7, characterised in that the thread (15) of its hollow shank (11) has an isosceles trapezium-shaped axial section.

9. A threaded insert according to Claim 8, characterised in that the inclination (I), to the mid-line of the assembly, on each of the sides of the isosceles trapezium-shaped axial section of the thread (15) of the hollow shank (11) is in the order of 20°.

10. A threaded insert according to any one of Claims 1 to 9, characterised in that on the side of its head (16), the external surface (14) of the hollow shank (11) which moreover is cylindrical in its lineal portion diverges slightly towards said head (16).

11. A threaded insert according to any one of Claims 1 to 10, characterised in that the bottom surface (22) of the head (16) is flat.

12. A threaded insert according to any one of Claims 1 to 10, characterised in that the bottom surface (22) of its head (16) is frustoconical.

13. A threaded insert according to any one of Claims 1 to 12, characterised in that the bottom surface (22) of its head (16) has at least one projecting lug (40).

14. A threaded insert according to any one of Claims 1 to 13, characterised in that the interlocking means (17) provided on its head (16) comprise two lugs which can be broken off and which are disposed in mutually diametrally opposite positions.

15. A threaded insert according to Claim 14, characterised in that the interlocking means (17) provided on its head (16) also comprise a diametral slot (25) in a cruciform arrangement with said break-off lugs.

16. A threaded insert according to any one of Claims 1 to 15, characterised in that the internal surface (12) of its hollow shank (11) is splined.
